# EUROPEAN PATENT APPLICATION

(11) **EP 1 708 486 A2**
(43) Date of publication of application: **04.10.2006**
(21) Application number: 06006309.6
(22) Date of filing: 27.03.2006
(51) Int. Cl.: H04N 5/04, H04N 5/44

(54) **Digital broadcast receiving apparatus and method for processing synchronization therein**

(30) Priority: 31.03.2005 KR 20050027416
(71) Applicant: Samsung Electronics Co., Ltd., Suwon-si Gyeonggi-do (KR)
(72) Inventor: Lee, Young-Sik, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a digital broadcast receiving apparatus that synchronizes a video frame with an audio frame during the reception of a digital broadcast. The digital broadcast receiving apparatus includes a video decoder for receiving and decoding video frames according to a digital broadcast to output the decoded video frames, and a synchronization processing unit for dropping video frames at predetermined intervals if decoding of the video frames is delayed.

## Description

The present invention relates to a digital broadcast receiving apparatus and a synchronization method between an audio frame and a video frame therein.

With the development of digital broadcasting technology and mobile communication technology, a digital broadcasting service that enables a user to view digital multimedia broadcasts even while the user is in motion becomes an increasing matter of concern. Digital multimedia broadcasting (hereinafter referred to as a "DMB") is a broadcasting service that makes it possible for a user to view diverse multimedia broadcasts over multichannels through a personal portable receiver or a receiver for vehicles, even while the user is in motion. Meanwhile, the portable receiver or the vehicle receiver for receiving the DMB is called a digital broadcast receiving apparatus.

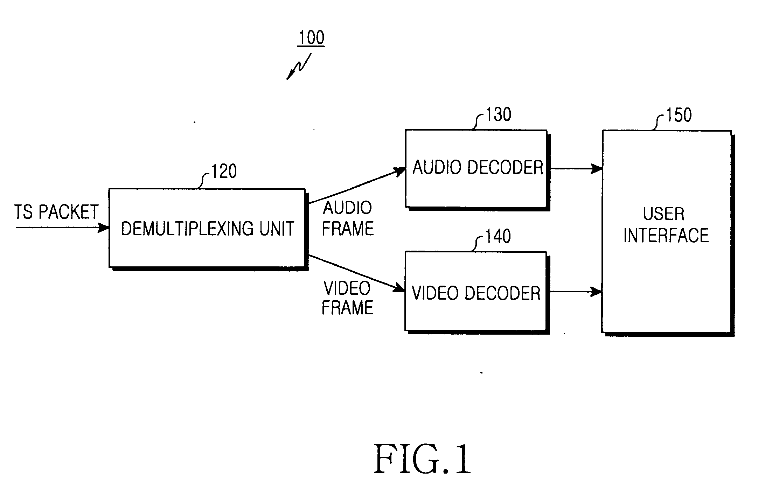

FIG. 1 is a block diagram illustrating the construction of a general digital broadcast receiving apparatus. Referring to FIG. 1, the digital broadcast receiving apparatus 100 includes a demultiplexing unit 120 for receiving and demultiplexing a transport stream (TS) packet into an audio frame and a video frame, an audio decoder 130 for receiving and decoding the audio frame from the demultiplexing unit 120 to output the decoded audio frame to a user interface 150, and a video decoder 140 for receiving and decoding the video frame from the demultiplexing unit 120 to output the decoded video frame to the user interface 150.

Since the volume of data of the video frame is far larger than the volume of data of the audio frame, the video decoder 140 processes a far larger amount of data than the audio decoder 130. Accordingly, the video decoder 140 may not perform the decoding process smoothly although it is physically constructed using many resources. For example, the video frame of a ground-wave DMB is composed of one I-frame and 29 P-frames per second (ABC and NBC standards), and in order to view the reproduced video frames over the whole display screen, the respective frames must be re-sized to fit the whole screen. In this case, the audio decoder 130 is not affected by the increased amount of audio data, but the video data 140 bears a heavy load. If the re-size processing time is 5msec per frame, it takes an additional 5msec in decoding the video frames, and thus 150msec (i.e., 5msec per second x 30 = 150msec) are accumulated per second. In this case, the decoding time may be delayed in comparison to the time for displaying the corresponding frame, and as the delay time is accumulated, the reproduction time of the video frames becomes late. If the delay time is accumulated for over 100~300msec, the time variance between the audio output and the video output is recognized by a user and causes an awkward presentation of the DMB data.

Accordingly, the present invention has been designed to solve the above and other problems occurring in the prior art.

It is the object of the present invention to provide a digital broadcast receiving apparatus and a method thereof that synchronizes a video frame with an audio frame during reception of a digital broadcast.

This object is solved by the subject matter of the independent claims.

Preferred embodiments are defined in the dependent claims.

According to an aspect of the present invention, there is provided a digital broadcast receiving apparatus and a method thereof that synchronizes a video frame with an audio frame so as to minimize the influence upon a video reproduction during the reception of a digital broadcast.

According to another aspect of the present invention, there is provided a digital broadcast receiving apparatus that includes a video decoder for receiving and decoding video frames according to a digital broadcast to output the decoded video frames, and a synchronization processing unit for dropping the video frames at predetermined intervals if the decoding of the video frames is delayed.

The present invention will be more apparent from the following detailed description taken in conjunction with the accompanying drawings, in which:
FIG. 1 is a block diagram illustrating the construction of a general digital broadcast receiving apparatus;
FIG. 2 is a block diagram illustrating the construction of a digital broadcast receiving apparatus according to an embodiment of the present invention;
FIG. 3 is a view illustrating the structure of a video frame in a DMB; and
FIG. 4 is a flowchart illustrating the operation of a synchronization processing unit of FIG. 2.

Preferred embodiments of the present invention will be described in detail hereinafter with reference to the accompanying drawings. In the following description of the present invention, only parts necessary for understanding the operation of the present invention will be explained, but a detailed description of known functions and configurations incorporated herein will be omitted when it may obscure the subject matter of the present invention.

A digital broadcast receiving apparatus according to the present invention is constructed to drop video frames at predetermined intervals if the decoding of the video frame is delayed during the reception of a DMB broadcast. Specifically, the present invention measures an accumulated delay time according to the decoding of the video frames, and if the accumulated delay time exceeds a specified threshold value, it drops a specified number of P-frames arranged prior to the next I-frame. At this time, the reason why the P-frames arranged prior to the next I-frame are dropped is that they have the least effect on the video image. A video frame includes one I-frame and 29 P-frames per second. Among them, the I-frame is used to construct most of an image and the P-frames are used to construct motion parts of the image based on the I-frame and a previous P-frame arranged prior to the P-frames themselves. Accordingly, if a P-frame arranged in the middle of many P-frames is dropped, the successive P-frame cannot properly be constructed. By contrast, if the P-frame which is arranged prior to the I-frame and is not affected by the previous frame is dropped, it does not affect the other frames, and thus the overall effect on the reproduction of the image can be minimized.

The digital broadcast receiving apparatus according to the present invention can drop a predetermined number of P-frames according to the accumulated delay time in decoding the video frames when it reaches the predetermined number of P-frames arranged prior to the next I-frame. For example, if the accumulated delay time according to the decoding of the video frames exceeds a first threshold value (for example, 67msec) in the case in which the interval between time stamps of the frame is 33msec, the digital broadcast receiving apparatus drops the 29^{th} P-frame. Also, if the accumulated delay time according to the decoding of the video frames exceeds a second threshold value (for example, 100msec), the apparatus drops the 28^{th} P-frame and the 29^{th} P-frame. In the embodiment of the present invention, the position of the P-frame to be dropped according to the respective threshold values can be determined. At this time, the interval between the respective threshold values is determined as the interval between the time stamps of the frame. In other words, if the accumulated delay time according to the decoding of the video frames exceeds the second threshold value, the 28^{th} P-frame is dropped, and since the accumulated delay time, from which the time obtained according to the dropped P-frame is subtracted, exceeds the first threshold value, the 29^{th} P-frame is then dropped.

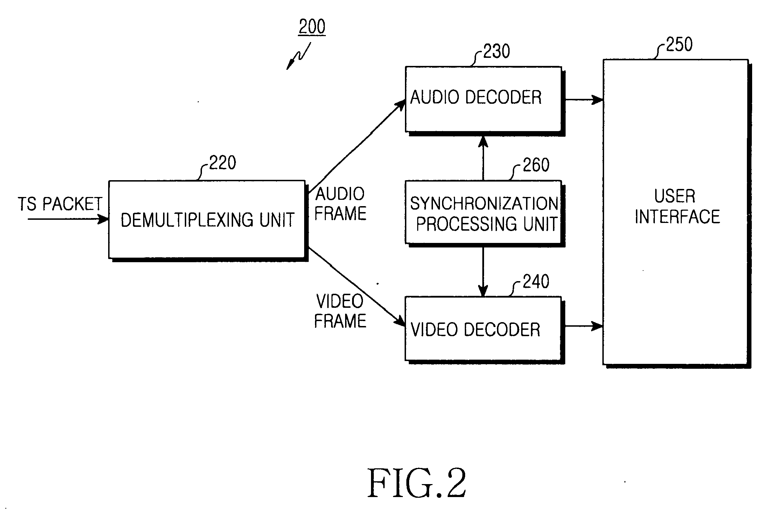

The construction and operation of the digital broadcast receiving apparatus according to the present invention will be explained with reference to FIG. 2.

FIG. 2 is a block diagram illustrating the construction of the digital broadcast receiving apparatus according to an embodiment of the present invention. Referring to FIG. 2, the digital broadcast receiving apparatus 200 includes a demultiplexing unit 220 for receiving and demultiplexing a transport stream (TS) packet into an audio frame and a video frame, an audio decoder 230 for receiving and decoding the audio frame from the demultiplexing unit 220 to output the decoded audio frame to a user interface 250, and a video decoder 240 for receiving and decoding the video frame from the demultiplexing unit 220 to output the decoded video frame to the user interface 250. The user interface 250 may include a keypad for receiving a user's key input, a speaker for outputting the decoded audio data as a sound that can be recognized by the user and a display unit for displaying the decoded video data as an image that can be recognized by the user.

Additionally, the digital broadcast receiving apparatus 200 includes a synchronization processing unit 260 for synchronizing the audio frame with the video frame by controlling the audio decoder 230 and the video decoder 240. The synchronization processing unit 260 is constructed to drop a video frame at predetermined intervals if the decoding of the video frames is delayed during the reception of a DMB broadcast.

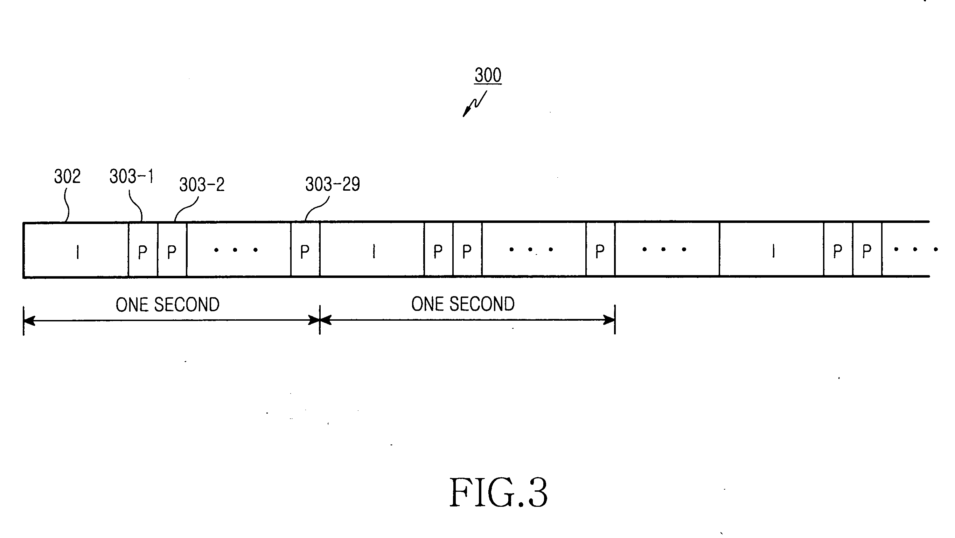

Hereinafter, the operation of the synchronization processing unit 260 will be explained with reference to a video frame as illustrated in FIG. 3. However, the present invention is not limited to such a video frame illustrated in FIG. 3, but it will be apparent to those skilled in the art that the present invention can be applied to any type of video frame.

As illustrated in FIG. 3, the video frame 300 includes one I-frame 302 and 29 P-frames 303-1 to 303-29 per second. The respective frame includes time stamp information for synchronization with the audio frame. The interval between the time stamps of the respective frames is constant, for example, 33msec in the case of a sky-wave DMB. Accordingly, if the respective frame is decoded and output within 33msec, the decoding time of the following frame is not affected and thus synchronization with the audio frame can smoothly be performed.

However, if the output time of the respective frame is delayed due to a decoding delay condition such as the re-sizing of the frame and the delayed time is accumulated, synchronization with the respective audio frame is off by as much as the accumulated delay time. In order to solve this problem, the synchronization processing unit 260 measures the accumulated delay time according to the decoding of the video frames. If the accumulated delay time exceeds a specified threshold value, the synchronization processing unit 260 drops the video frame that has the least effect on the image. Accordingly, the decoding time of the dropped video frame compensates for the accumulated delay time, and thus synchronization between the following video frame and the corresponding audio frame can smoothly be performed.

The synchronization processing unit 260 measures the accumulated delay time according to the decoding of the video frames, and if the accumulated delay time exceeds the specified threshold value, it drops the 29^{th} P-frame arranged prior to the next I-frame. As described above, the reason why the P-frames arranged prior to the next I-frame are dropped is that they have the least effect on the video image. If the P-frame arranged in the middle of many P-frames is dropped, the successive P-frame cannot properly be constructed. By contrast, if the P-frame which is arranged prior to the I-frame and is not affected by the previous frame is dropped, it does not affect the other frames, and thus the overall effect on the reproduction of the image can be minimized.

The synchronization processing unit 260 according to the present invention drops a predetermined number of P-frames according to the accumulated delay time in decoding the video frames when it reaches the predetermined number of P-frames arranged prior to the next I-frame. That is, if the accumulated delay time according to the decoding of the video frames exceeds a first threshold value, the synchronization processing unit drops the 29^{th} P-frame that is arranged prior to the next I-frame, while if the accumulated delay time according to the decoding of the video frames exceeds a second threshold value, the synchronization processing unit drops the 28^{th} P-frame and the 29^{th} P-frame which are arranged prior to the next I-frame. For example, if the interval between the time stamps of the video frames is 33msec, it is preferable that the first threshold value is 67msec and the second threshold value is 100msec according to the embodiment of the present invention.

As described above, the synchronization processing unit 260 may be constructed to determine the position of the P-frame that is dropped according to the respective threshold value. At this time, the interval between the respective threshold values is considered as the interval between the time stamps of the frame.

Specifically, the synchronization processing unit 260 drops the 29^{th} P-frame according to the first threshold value, and drops the 28^{th} P-frame according to the second threshold value. If the accumulated delay time according to the decoding of the video frames exceeds the second threshold value on the assumption that the first threshold value is smaller than the second threshold value, the synchronization processing unit 260 drops the 28^{th} P-frame. Also, since the accumulated delay time from which the frame decoding time of the dropped P-frame is subtracted exceeds the first threshold value, the synchronization processing unit 260 then drops the 29^{th} P-frame.

In summary, if the accumulated delay time according to the decoding of the video frames exceeds the first threshold value (for example, 67msec) in the case in which the interval between the time stamps of the video frames is 33msec, the synchronization processing unit 260 drops the 29^{th} P-frame. Additionally, if the accumulated delay time according to the decoding of the video frames exceeds the second threshold value (for example, 100msec), the synchronization processing unit drops the 28^{th} P-frame and the 29^{th} P-frame. Accordingly, the decoding time of at least one dropped video frame compensates for the accumulated delay time, and thus synchronization between the following video frame and the corresponding audio frame can smoothly be performed.

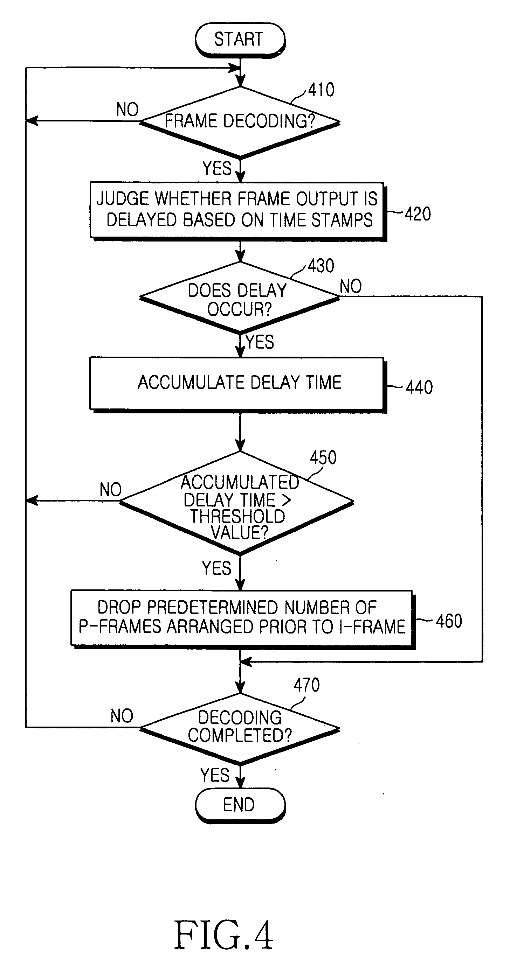

Hereinafter, the operation of the synchronization processing unit 260 according to an embodiment of the present invention will be explained with reference to FIG. 4.

Referring to FIG. 4, the synchronization processing unit 260 checks whether the decoding of the video frames is performed in the video decoder 240 at step 410. If the decoding of the video frames is performed, the synchronization processing unit 260 proceeds to step 420, and determines whether an output delay of the corresponding video frame occurs based on the time stamp of the corresponding video frame. That is, the synchronization processing unit 240 determines whether the decoding time of the corresponding frame exceeds the predetermined decoding time, for example, the time according to the interval between the time stamps of the respective frame. The interval between the time stamps of the respective frame is constant, for example, 33msec in the case of the sky-wave DMB. Accordingly, if the respective frame is decoded and output within 33msec, it does not affect the decoding time of the following frame and thus synchronization with the audio frame can smoothly be performed. Then, the synchronization processing unit 260 determines whether a delay of the decoding time of the corresponding frame occurs according to the result of determining the output delay of the corresponding frame at step 430. If the predetermined decoding time is 33msec and the decoding time of the corresponding frame is 40msec, the output delay time of the corresponding video frame becomes 7msec. If no delay occurs in the decoding time of the corresponding frame, the synchronization processing unit 260 proceeds to step 470.

However, if the delay occurs in the decoding time of the corresponding frame, the synchronization processing unit 260 proceeds to step 440, and accumulates the decoding time by as much as the delay time with respect to the corresponding frame. Then, the synchronization processing unit 260 determines whether the accumulated delay time exceeds the specified threshold value. If the accumulated delay time exceeds the specified threshold value, the synchronization processing unit proceeds to step 460 and drops the predetermined number of P-frames arranged prior to the I-frame.

For example, if the accumulated delay time exceeds the specified threshold value, the synchronization processing unit 260 drops the 29^{th} P-frame arranged prior to the next I-frame. As described above, the reason why the 29^{th} P-frame arranged prior to the next I-frame is dropped is that it has the least effect on the video image.

Meanwhile, the synchronization processing unit 260 according to the present invention drops the 29^{th} P-frame arranged prior to the next I-frame if the accumulated delay time according to the decoding of the video frames exceeds the first threshold value, and drops the 28^{th} P-frame and the 29^{th} P-frame arranged prior to the next I-frame if the accumulated delay time exceeds the second threshold value. For example, if the interval between the time stamps of the video frames is 33msec, it is preferable that the first threshold value is 67msec and the second threshold value is 100msec according to the embodiment of the present invention.

Then, the synchronization processing unit 260 proceeds to step 470 and determines whether the decoding of the video frames is completed. If the decoding of the video frames is not completed, the synchronization processing unit 260 returns to the step 410.

As described above, the digital broadcast receiving apparatus according to the present invention is constructed to drop the video frames at predetermined intervals if the decoding of the video frames is delayed during the reception of the DMB broadcast, and thus to solve the problem in that as the delay time is accumulated during the decoding of the video frames, the reproduction time of the video frames is later than the corresponding audio frames.

In the embodiment of the present invention, it is exemplified that the video data is composed of 30 video frames per second. However, it will be apparent to those skilled in the art that the present invention can be applied to video data composed of any number of video frames per second.

While the present invention has been shown and described with reference to certain preferred embodiments thereof, it will be understood by those skilled in the art that various changes in form and details may be made therein without departing from the scope of the present invention as defined by the appended claims.

## Claims

1. A digital broadcast receiving apparatus comprising:
a video decoder for receiving and decoding video frames according to a digital broadcast to output the decoded video frames; and
a synchronization processing unit for dropping video frames at predetermined intervals if decoding of the video frames is delayed.

2. The digital broadcast receiving apparatus as claimed in claim 1, wherein the synchronization processing unit measures an accumulated delay time according to the decoding of the video frames, and drops a P-frame arranged prior to a next I-frame if the accumulated delay time exceeds a specified threshold value.

3. The digital broadcast receiving apparatus as claimed in claim 1, wherein the synchronization processing unit measures an accumulated delay time according to the decoding of the video frames, and drops a predetermined number of P-frames arranged prior to a next I-frame according to the accumulated delay time according to the decoding of the video frames when it reaches the predetermined number of P-frames.

4. The digital broadcast receiving apparatus as claimed in claim 1, wherein the synchronization processing unit measures an accumulated delay time according to the decoding of the video frames, and drops a P-frame arranged prior to a next I-frame if the accumulated delay time exceeds a first threshold value, and the synchronization processing unit drops two P-frames arranged prior to the next I-frame if the accumulated delay time exceeds a second threshold value.

5. A method for processing synchronization between audio frames and video frames in a digital broadcast receiving apparatus, the method comprising the steps of:
receiving and decoding video frames according to a digital broadcast to output the decoded video frames; and
dropping video frames at predetermined intervals if decoding of the video frames is delayed.

6. The method as claimed in claim 5, wherein the dropping step comprises:
measuring an accumulated delay time according to the decoding of the video frames; and
dropping a P-frame arranged prior to a next I-frame if the accumulated delay time exceeds a specified threshold value.

7. The method as claimed in claim 5, wherein the dropping step comprises:
measuring an accumulated delay time according to the decoding of the video frames; and
dropping a predetermined number of P-frames arranged prior to a next I-frame according to the accumulated delay time according to the decoding of the video frames when it reaches the predetermined number of P-frames.

8. The method as claimed in claim 5, wherein the dropping step comprises:
measuring an accumulated delay time according to the decoding of the video frames; and
dropping a P-frame arranged prior to a next I-frame if the accumulated delay time exceeds a first threshold value, and dropping two P-frames arranged prior to the next I-frame if the accumulated delay time exceeds a second threshold value.
